# FASCICULE DE BREVET EUROPEEN

(11) **EP 2 200 255 B1**
(45) Date de publication et mention de la délivrance du brevet: **18.03.2015**
(21) Numéro de dépôt: 09179584.9
(22) Date de dépôt: 17.12.2009
(51) Int. Cl.: H04M 3/56, H04M 3/428, H04L 29/06

(54) **Inhibition d'une perturbation de conférence mono ou multimedia**
Störungshemmung einer Einkanal- oder Multimedia-Konferenz
Inhibition of a perturbation in a mono or multimedia conference

(30) Priorité: 18.12.2008 FR 0858787
(43) Date de publication de la demande: 23.06.2010
(73) Titulaire: Orange, 75015 Paris (FR)
(72) Inventeur: Bouvet, Bertrand, 22700, PERROS-GUIREC (FR); Gustin, Emmanuel, 22700, SAINT QUAY PERROS (FR)

(56) Documents cités:
- US-A1- 2003 142 662
- US-B1- 6 438 216

## Description

La présente invention se rapporte de manière générale au domaine des télécommunications et plus précisément aux équipements permettant de mettre en relation plus de deux personnes au sein d'une même conversation, encore appelés ponts de conférence.

Un tel pont de conférence est interfacé à un réseau de télécommunication auquel sont connectés des utilisateurs. Il comprend un gestionnaire de conférence, permettant de gérer un nombre prédéfini de conférences téléphoniques ou multimédia en parallèle. Ce gestionnaire identifie un organisateur d'une conférence par une séquence de DTMF (d'après l'anglais "Dual Tone Multi Frequency") lorsqu'il se connecte à cette conférence préalablement réservée. Lorsque la conférence est initiée, un automate d'appel entrant accepte automatiquement les appels des participants à la conférence dans une limite prédéfinie par l'organisateur de la conférence. Ces appels sont dirigés vers une fonction d'acquisition des flux de données émis par les participants à la conférence, puis mixés par une fonction avancée de mixage intégrant une fonction de détection d'activité vocale sur les différents flux de données acquis par la fonction d'acquisition. Les flux ainsi mixés sont ensuite diffusés à l'ensemble des participants.

Un inconvénient de ces ponts de conférence existants est que ces ponts ne permettent pas de déconnecter un participant à une conférence lorsqu'il introduit une perturbation dans une conférence téléphonique, notamment lorsqu'il se trouve en situation de double appel.

En effet lorsqu'un participant disposant des services "appel en instance" (appelé "call waiting" en anglais) et "signal d'appel", reçoit un appel d'un correspondant alors qu'il est en conférence téléphonique ou multimédia, il en est notifié par un bip sonore. Le numéro du correspondant s'affiche sur son terminal s'il n'est pas masqué. Si le participant décide d'accepter l'appel en mettant la conférence en attente, les autres participants à la conférence reçoivent une musique d'attente diffusée par le réseau pendant toute la conversation entre ce participant et son correspondant, ce qui perturbe très fortement la conférence. Le seul moyen pour l'organisateur de la conférence de stopper cette musique d'attente est alors de se déconnecter de la conférence, ce qui déconnecte tous les participants, puis de se reconnecter sur le pont de conférence, pour que les autres participants se reconnectent à nouveau, ce qui est long et peu pratique.

De même, lorsqu'un participant disposant du service "double appel" initie un appel sortant vers un correspondant alors qu'il est en conférence téléphonique ou multimédia, les autres participants à la conférence reçoivent une musique d'attente pendant toute la conversation entre ce participant et son correspondant, ce qui perturbe la conférence de la même façon.

Le document US 2003/142662 A1 décrit un terminal permettant à un utilisateur de mettre en conférence plusieurs sessions de communication et de metttre en attente les sessions de communication afin de communiquer avec un seul participant. Un inconvénient est que les participants ne sont alors plus en conférence.

Un des buts de l'invention est de remédier à au moins une partie des inconvénients de la technique antérieure en fournissant un procédé de communication ainsi qu'un dispositif permettant d'inhiber des perturbations survenant lors d'une conférence téléphonique ou multimédia et causées par des participants se trouvant dans une situation de double appel.

A cette fin, l'invention propose un procédé de communication mettant en relation au moins trois utilisateurs au sein d'une conférence, comportant:
- une étape de réception de flux de données émis par lesdits utilisateurs,
- une étape de mixage desdits flux de données,
**caractérisé en ce qu**'il comporte en outre:
- une étape de détection d'un passage en communication monodirectionnelle en direction de la conférence, d'un desdits utilisateurs,
- déclenchant une étape d'inhibition d'un canal de communication comportant un flux de données émis par ledit utilisateur et reçu lors de ladite étape de réception.

Ainsi, un dispositif implémentant le procédé selon l'invention, tel qu'un pont de conférence, détecte les situations de double appel, et empêche dans une telle situation la musique d'attente liée à un double appel et transmise monodirectionnellement vers ce dispositif, de perturber une conférence en cours. Les participants à la conférence qui ne sont pas engagés dans une autre conversation sont ainsi à même de continuer leur réunion téléphonique ou multimédia, sans intervention nécessaire de l'organisateur de la conférence.

Avantageusement, ladite étape de détection utilise la valeur d'un paramètre de message de signalisation, significative d'un basculement en mode unidirectionnel dudit canal de communication établi avec ledit utilisateur et comportant ledit flux de données.

On utilise par exemple la valeur "Mise en garde" d'un élément d'information (en anglais "Information Element") du message "ISUP (d'après l'anglais "Integrated Services User Part") PRG", signalant qu'on se connecte à une entité du réseau diffusant une musique d'attente, ou d'un attribut SDP (d'après l'anglais "Session Description Protocol") d'un message "SIP (d'après l'anglais "Session Initiation Protocol") Relnvite" indiquant que l'un des participants ne fera qu'émettre des données sur son canal de communication avec le pont de conférence, ou encore la valeur "SendOnly" d'un attribut dans un message "MGCP (d'après l'anglais "Media Gateway Control Protocol") Modify Connection" en provenance de l'un des participants. L'utilisation des ces valeurs existantes dans les messages de signalisation permet de s'affranchir de modifier les équipements diffusant de la musique d'attente dans le réseau pour que ces équipements envoient par exemple des DTMF spécifiques signalant le début ou la fin de la transmission d'une musique d'attente. En effet dans cette alternative d'implémentation utilisant des DTMF spécifiques, il est plus facile au niveau du pont de conférence de détecter l'arrivée d'une perturbation dans la conférence.

Avantageusement, le procédé de communication selon l'invention comporte en outre:
- une étape de détection d'un basculement vers la conférence par ledit utilisateur,
- déclenchant une étape de réactivation dudit canal de communication précédemment inhibé.

Cette caractéristique avantageuse du procédé de communication selon l'invention permet à un participant en double appel de rebasculer dans la conférence sans avoir à se déconnecter de celle-ci puis s'y reconnecter. En effet lorsque le pont de conférence détecte une situation de double appel, il bloque le flux de données en provenance du participant dans cette situation. Il faut donc que le pont de conférence réactive le canal de communication comportant le flux de données émis par le participant pour que celui-ci puisse à nouveau être mis en relation avec les autres participants.

Avantageusement, ladite étape de détection d'un basculement vers la conférence utilise la valeur d'un paramètre de message de signalisation, significative d'un basculement en mode bidirectionnel dudit canal de communication établi avec ledit utilisateur.

Symétriquement à la détection de la diffusion d'une musique d'attente par une entité réseau liée au double appel, on utilise par exemple la valeur "Levée de mise en garde" d'un élément d'information d'un message "ISUP PRG", lorsque le pont de conférence dialogue avec le réseau en utilisant ce protocole.

L'invention concerne également un dispositif comportant des moyens de mise en relation d'au moins trois utilisateurs au sein d'une conférence, lesdits moyens de mise en relation comportant des moyens de réception de flux de données émis par lesdits utilisateurs, et des moyens de mixage desdits flux de données, ledit dispositif étant **caractérisé en ce qu**'il comporte en outre des moyens de détection d'un passage en communication monodirectionnelle en direction de la conférence, d'un desdits utilisateurs, déclenchant des moyens d'inhibition d'un canal de communication comportant un flux de données émis par ledit utilisateur en sortie desdits moyens de réception.

L'invention concerne enfin un programme d'ordinateur comportant des instructions pour mettre en oeuvre le procédé de communication selon l'invention, lorsqu'il est exécuté sur un ordinateur.

Le dispositif et le programme d'ordinateur selon l'invention présentent des avantages analogues à ceux du procédé de communication selon l'invention.

D'autres caractéristiques et avantages apparaîtront à la lecture d'un mode de réalisation préféré décrit en référence aux figures dans lesquelles :
- la figure 1 représente un réseau de télécommunication dans lequel est implémenté le procédé de communication selon l'invention,
- la figure 2 représente des étapes du procédé de communication selon l'invention dans ce mode de réalisation de l'invention,
- la figure 3 représente la première partie d'un diagramme de flux illustrant un cas d'usage du procédé de communication selon l'invention,
- la figure 4 représente la deuxième partie de ce diagramme de flux,
- et la figure 5 représente la troisième et dernière partie de ce diagramme de flux.

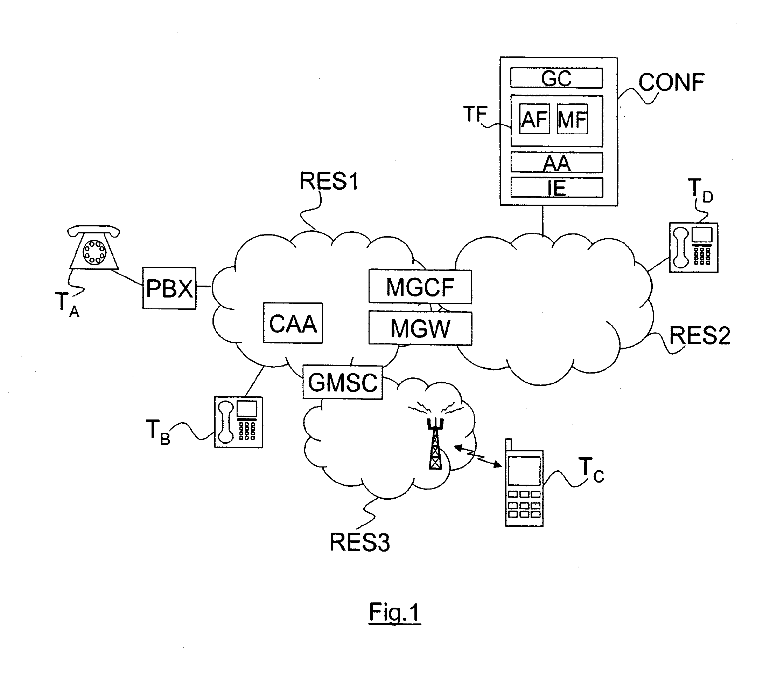

Selon un mode préféré de réalisation de l'invention, le procédé de communication selon l'invention est implémenté dans un pont de conférence multimédia CONF, représenté à la **figure 1**, et connecté à un réseau RES2 de voix sur IP (d'après l'anglais "Internet Protocol"), utilisant le protocole SIP. Le réseau RES2 est connecté à un réseau RES1, qui est un réseau RTC (Réseau Téléphonique Commuté)-RNIS(Réseau Numérique à Intégration de Services). L'interface entre ces deux réseaux RES1 et RES2 est assurée par:
- une passerelle MGW de conversion de flux média, appelée communément "Media Gateway",
- et une passerelle d'interconnexion MGCF implémentant la fonction appelée communément "Media Gateway Control Function", effectuant de la conversion protocolaire entre ces deux réseaux, et contrôlant la passerelle MGW.
Le réseau RES1 est également connecté à un réseau mobile RES3 de deuxième ou troisième génération par l'intermédiaire d'une passerelle GMSC (d'après l'anglais Gateway Mobile Switching Center").

Le pont de conférence CONF comporte plusieurs modules logiciels et/ou matériels:
- un gestionnaire GC de conférence, permettant de gérer plusieurs conférences en parallèle sur le pont de conférence CONF; ce gestionnaire GC identifie une conférence par un numéro de téléphone et une séquence DTMF que lui communique l'organisateur de cette conférence,
- une interface Ethernet lE implémentant la couche de transport IP,
- un automate AA de traitement d'appel entrant, dialoguant en protocole SIP avec le réseau RES2,
- un module AF d'acquisition de flux média, permettant d'acquérir les flux média émis par des participants à une conférence,
- un module MF implémentant une fonction de mixage des flux média que lui transmet le module AF pour une même conférence, cette fonction de mixage utilisant une fonction de détection d'activité vocale sur chacun de ces flux. Le module MF diffuse ensuite les flux mixés vers des ports de sortie correspondant chacun à un participant à la conférence.
Les modules AF d'acquisition de flux média, et MF de mixage, font partie d'un module TF de traitement de flux média.

Il est à noter que d'autres implémentations de l'invention sont envisageables. Par exemple en variante, si le pont de conférence CONF est interfacé au réseau RES1, il comporte une interface RNIS T2 au lieu d'une interface Ethernet, et un automate de traitement d'appel utilisant le protocole RNIS pour traiter les appels entrants. De même si en variante le pont de conférence CONF est interfacé à un réseau de voix sur IP utilisant le protocole H.323 au lieu du protocole SIP, l'automate de traitement d'appel du pont de conférence CONF dialogue alors en H.323 avec ce réseau. En outre, dans ce mode de réalisation de l'invention, l'invention est implémentée dans un pont de conférence multimédia interconnecté au réseau RES2, mais dans d'autres modes de réalisation, l'invention est par exemple implémentée dans la passerelle MGW, ou dans un PBX (Private Branch Exchange) ou dans une passerelle domestique (ex: Livebox Orange), ou encore dans un terminal. Enfin l'invention est applicable aussi bien aux conférences multimédia qu'aux conférences téléphoniques mono-média.

On considère maintenant un cas d'usage du procédé de communication selon l'invention, lors d'une conférence téléphonique entre l'utilisateur d'un téléphone fixe T_{A}, relié au réseau RES1 par l'intermédiaire d'un autocommutateur téléphonique privé PBX, l'utilisateur d'un téléphone fixe T_{B} relié directement au réseau RES1, et l'utilisateur d'un téléphone fixe T_{D} relié au réseau RES2. L'autocommutateur PBX et l'utilisateur du téléphone T_{B} sont raccordés dans le réseau RES1 au Commutateur à Autonomie d'Acheminement CAA.

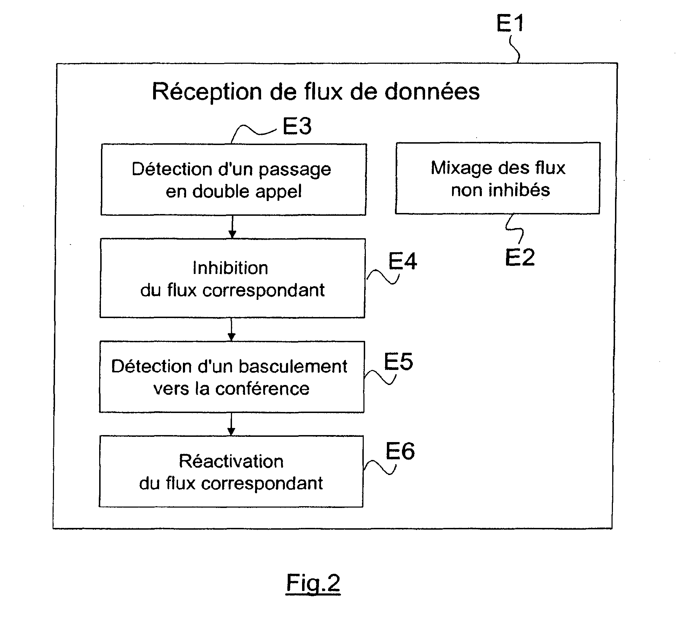

En référence à la **figure 2**, le procédé de communication selon l'invention est représenté sous la forme d'un algorithme comportant des étapes E1 à E6.

L'étape E1 est la réception, par le pont de conférence CONF, des flux de données en provenance des utilisateurs des téléphones T_{A}, T_{B} et T_{D} connectés au pont de conférence CONF. On considère en effet dans cette étape que la conférence téléphonique est déjà établie entre ces trois utilisateurs. Dans cette étape E1, les flux de données sont des flux voix transportés sur RTP (d'après l'anglais "Real-time Transport Protocol") et sont acquis par le module AF d'acquisition des flux. Le module AF, envoie, pendant cette étape E1 de réception, les flux de données ainsi acquis et non inhibés au module de mixage MF.

On appelle flux de données "inhibé", dans ce mode de réalisation de l'invention, un flux de données pour lequel l'automate AA a bloqué le port d'entrée au niveau du module MF de mixage. Au début de la conférence téléphonique entre les trois utilisateurs des téléphones T_{A}, T_{B} et T_{D}, aucun des flux de données en provenance de ces utilisateurs ne sont inhibés, le blocage d'un port d'entrée sur le module MF par l'automate AA n'étant effectué que lors de l'étape E4, conditionnellement à la détection d'un évènement.

Il est à noter que plusieurs implémentations des moyens d'inhibition du flux de données en provenance d'un participant à une conférence selon l'invention sont envisageables. En effet, il suffit pour inhiber ce flux de données, de le bloquer n'importe où sur son chemin au niveau du pont de conférence CONF, pourvu qu'il n'entre pas dans le module MF de mixage. Ainsi il suffit que l'automate AA bloque le port d'entrée de ce flux au niveau du module de mixage MF, ou encore le port de sortie du module AF d'acquisition.

L'étape E2 est le mixage des flux de données reçus par le module MF de mixage lors de l'étape E1. Cette étape a lieu pendant l'étape E1 et utilise une détection d'activité vocale sur chacun des flux correspondants aux utilisateurs des téléphones T_{A}, T_{B} et T_{D}. Le module MF transmet en continu les flux ainsi mixés vers chacun des utilisateurs des téléphones T_{A}, T_{B} et T_{D} sur des ports de sortie appropriés. Plus précisément, le module MF envoie:
- un flux de données correspondant au mixage des flux de données reçus depuis les téléphones T_{A} et T_{B} à l'utilisateur du téléphone T_{D},
- un flux de données correspondant au mixage des flux de données reçus depuis les téléphones T_{B} et T_{D} à l'utilisateur du téléphone T_{A},
- et un flux de données correspondant au mixage des flux de données reçus depuis les téléphones T_{A} et T_{D} à l'utilisateur du téléphone T_{B}.

On suppose maintenant que l'utilisateur d'un téléphone mobile T_{C}, connecté au réseau mobile RES3, appelle l'utilisateur du téléphone fixe T_{B}, celui-ci étant abonné au service "appel en instance", et que l'utilisateur du téléphone fixe T_{B} accepte l'appel. L'étape suivante est alors l'étape E3.

Il est à noter que dans l'hypothèse où il n'y aurait pas de situation de double appel pendant la conférence téléphonique, le pont de conférence CONF ne mettrait en oeuvre que les étapes E1 et E2, et le procédé de communication selon l'invention ne serait pas utilisé.

L'étape E3 est la détection d'un passage en double appel d'un des utilisateurs. Cette étape est implémentée par l'automate AA de traitement d'appel entrant, par analyse des messages de signalisation SIP en provenance des téléphones T_{A}, T_{B} et T_{D}, pendant toute la durée de la conférence téléphonique. Plus précisément, l'automate AA détecte une situation de double appel lorsqu'il reçoit un message SIP "Re-Invite" ayant pour origine une situation de double appel sur au moins un des téléphones T_{A}, T_{B} ou T_{D}, ce message comportant dans ses paramètres SDP un attribut ayant la valeur "SendOnly". Dans le cas d'usage décrit ici, l'automate AA détecte la réception d'un tel message SIP ayant pour origine la situation de double appel du téléphone T_{B}. Ce message est en fait la traduction par la passerelle MGCF d'un message " ISUP PRG" (pour l'anglais "PROGRESS") envoyé par le commutateur CAA à la passerelle MGCF pour signaler la diffusion unidirectionnelle d'une musique d'attente, vers le premier interlocuteur de l'utilisateur du téléphone T_{B}, c'est-à-dire le pont de conférence CONF. La passerelle MGCF traduit ce message par une renégociation de codecs selon la procédure SIP "Re-Invite", indiquant au pont de conférence CONF que la communication devient unidirectionnelle vers le pont de conférence CONF.

Il est à noter que dans cette étape E3, le port de sortie du module de mixage MF correspondant à l'utilisateur du téléphone T_{B} est également bloqué, puisque la connexion correspondant à cet utilisateur est devenue monodirectionnelle depuis le commutateur CAA vers le pont de conférence CONF, suite à la renégociation de codecs.

En outre lors de cette étape E3, le gestionnaire de conférence GC affiche par exemple sur une interface de contrôle dédiée au maître de conférence, une indication que l'utilisateur du téléphone T_{B} est temporairement sorti de la conférence.

Dans une variante où le pont de conférence CONF est interfacé au réseau RES1 par une interface RNIS T2, dans cette étape E3, l'automate AA de traitement d'appel détecte une situation de double appel lorsqu'il reçoit du réseau un message "ISUP PRG" comportant l'élément d'information "Mise en garde", signalant une connexion à une entité du réseau diffusant une musique d'attente.

De même dans une autre variante où le pont de conférence CONF est intégré dans la passerelle MGW, dans cette étape E3 l'automate AA de traitement d'appel détecte une situation de double appel lorsqu'il reçoit d'un des participants à la conférence un message "MGCP Modify Connection" contenant un attribut ayant la valeur "SendOnly".

Enfin dans une variante où le pont de conférence CONF est interfacé à un réseau de voix sur IP utilisant le protocole H.323, dans cette étape E3, l'automate AA de traitement d'appel détecte une situation de double appel lorsque l'un des participants à la conférence l'implique dans une procédure de renégociation de capacité appelée procédure "TerminalCapabilitySet =Null" avec négociation de capacité en mode "SendOnly".

L'étape suivante E4 est l'inhibition du canal de communication correspondant au flux de données émis par le participant pour lequel l'automate AA a détecté une situation de double appel à l'étape E3. Pour cela, l'automate AA de traitement d'appel inhibe le port d'entrée du module MF de mixage correspondant au flux de données émis par ce participant, ici l'utilisateur du téléphone T_{B}. Cette étape E4 est déclenchée par l'étape E3 et a lieu en parallèle des étapes E1 de réception et E2 de mixage des flux de données non inhibés.

On suppose maintenant que l'utilisateur du téléphone fixe T_{B} bascule dans la conférence téléphonique, soit en mettant l'utilisateur du téléphone T_{C} en attente, soit en libérant la communication avec l'utilisateur du téléphone T_{C}.

L'étape E5 suivante est alors la détection du basculement de l'utilisateur du téléphone T_{B} dans la conférence téléphonique. Pour cela, l'automate AA d'appel entrant détecte la réception d'un message SIP "Re-Invite" de la part du téléphone T_{B}, ce message comportant dans ses paramètres SDP un attribut ayant la valeur "SendRecv". Ce message est en fait la traduction par la passerelle MGCF d'un message "ISUP PRG" incluant l'élément d'information "Levée de mise en garde" envoyé par le commutateur CAA à la passerelle MGCF pour signaler la reprise d'une communication bidirectionnelle avec le pont de conférence CONF. La passerelle MGCF traduit ce message par une renégociation de codecs selon la procédure SIP "Re-Invite", indiquant au pont de conférence CONF que la communication redevient bidirectionnelle avec le pont de conférence CONF.

Lors de cette étape E5, le gestionnaire de conférence GC signale au maître de conférence sur l'interface de contrôle dédiée, que l'utilisateur du téléphone T_{B} est revenu dans la conférence.

Dans la variante où le pont de conférence CONF est interfacé au réseau RES1 par une interface RNIS T2, dans cette étape E5, l'automate AA de traitement d'appel détecte le basculement de l'utilisateur du téléphone fixe T_{B} dans la conférence lorsqu'il reçoit de celui-ci un message "ISUP PRG" incluant l'élément d'information "Levée de mise en garde", signalant qu'on reprend une communication bidirectionnelle.

De même dans la variante où le pont de conférence CONF est intégré dans la passerelle MGW, dans cette étape E5 l'automate AA de traitement d'appel détecte le basculement de l'utilisateur du téléphone fixe T_{B} dans la conférence lorsqu'il reçoit de celui-ci un message "MGCP Modify Connection" contenant un attribut ayant la valeur "SendRecv".

Enfin dans la variante où le pont de conférence CONF est interfacé à un réseau de voix sur IP utilisant le protocole H.323, dans cette étape E5 l'automate AA de traitement d'appel détecte le basculement de l'utilisateur du téléphone fixe T_{B} dans la conférence lorsque celui-ci l'implique dans une procédure de renégociation de capacité "TerminalCapabilitySet =Null" avec négociation de capacité en mode "SendReceive".

L'étape suivante E6, déclenchée par l'étape E5, est la réactivation du canal de communication transportant un flux de données en provenance de l'utilisateur du téléphone T_{B}, en entrée du module MF de mixage. Pour cela, l'automate AA de traitement d'appel réactive le port d'entrée du module MF de mixage correspondant au flux de données reçu par le pont de conférence CONF en provenance de l'utilisateur du téléphone T_{B}. Il est à noter que parallèlement à ces étapes E5 et E6, le port de sortie du module MF de mixage correspondant à l'utilisateur du téléphone T_{B} est également réactivé par l'automate AA de traitement d'appel entrant, du fait du changement de la connexion avec cet utilisateur en mode bidirectionnel, ayant lieu en parallèle de ces étapes.

Bien entendu les étapes E5 et E6 du procédé de communication selon l'invention n'ont lieu que lorsque l'un des participants à une conférence téléphonique en situation de double appel reprend la conférence téléphonique. De plus il est à noter que dans cet exemple d'utilisation de l'invention, les étapes E3 et E4 sont déclenchées lorsqu'un appel entrant vers l'un des utilisateurs des téléphones T_{A}, T_{B} et T_{D} est accepté par cet utilisateur, mais les étapes E3 et E4 sont déclenchables également par un appel sortant d'un de ces utilisateurs, lorsque celui-ci est abonné au service "double appel".

De plus dans cet exemple d'utilisation de l'invention, le procédé de communication selon l'invention est utilisé par des utilisateurs de téléphone fixe en conférence téléphonique, mais le procédé de communication selon l'invention est également utilisable par des utilisateurs d'autres types de terminaux, par exemple des terminaux mobiles ou des ordinateurs personnels, en conférence téléphonique ou multimédia.

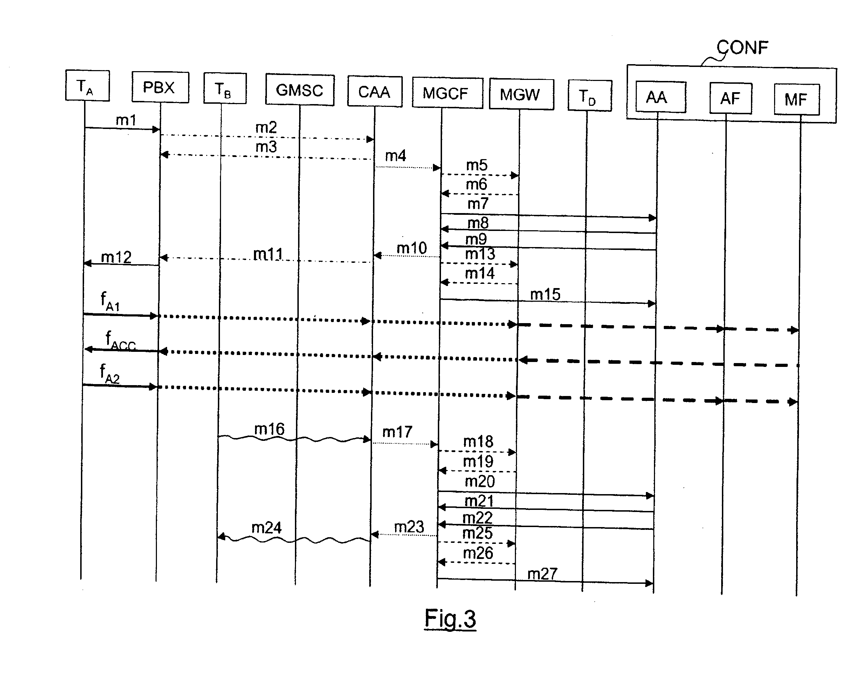

On décrit maintenant, en relation avec les **figures 3****,** **4** **et** **5**, un diagramme de flux correspondant au cas d'usage décrit précédemment en relation avec la **figure 2**.

On décrit tout d'abord l'établissement de la conférence téléphonique. L'utilisateur du téléphone T_{A}, que l'on suppose ici organisateur de la conférence téléphonique, compose un numéro réservé pour cette conférence, ce qui provoque l'envoi d'un message m1 propriétaire vers l'autocommutateur PBX. Ce message m1 est représenté en trait droit sur la **figure 3**, les messages en trait droit figurant une communication numérique par opposition aux messages en trait ondulé figurant une communication analogique.

A la réception du message m1, l'autocommutateur PBX envoie un message m2 "RNIS Setup" vers le commutateur CAA, qui transmet en réponse à l'autocommutateur PBX un message m3 "RNIS Call Proceeding" et transmet en parallèle un message m4 "ISUP Initial Address Message" à la passerelle MGCF.

A la réception du message m4, la passerelle MGCF demande à la passerelle MGW de créer une connexion en mode réception en lui envoyant un message m5 "MGCP Create Connection (RecvOnly, G.711A, G.729A, RFC4733)" comportant en attributs une indication "RecvOnly" du mode réception, les codecs compatibles et une indication de traitement des DTMF selon le standard RFC4733. La passerelle MGW répond positivement à la passerelle MGCF par un message m6 "MGCP 200 OK (SDP MGW, a=RecvOnly)" comportant les paramètres de session SDP de la passerelle MGW.

Puis la passerelle MGCF envoie un message m7 "SIP Invite" de la part de l'utilisateur du téléphone T_{A}, comportant notamment une offre de paramètres SDP correspondant à la passerelle MGW, une indication d'une connexion bidirectionnelle grâce à l'attribut "SendRecv", le numéro réservé pour la conférence et une indication de traitement des DTMF selon le standard RFC4733, au pont de conférence CONF. Au niveau du pont de conférence CONF, ce message comme les autres messages en provenance du réseau RES2 sont traités par l'automate AA de traitement d'appel entrant. Le pont de conférence CONF répond à la passerelle MGCF par un message m8 "SIP Trying", puis par un message m9 "SIP 200 OK" contenant une réponse SDP correspondant au pont de conférence CONF, et une indication d'une connexion bidirectionnelle grâce à l'attribut "SendRecv" pour établir la connexion avec le téléphone T_{A}.

A la réception du message m9, la passerelle MGCF envoie un message m10 "ISUP CON" au commutateur CAA, qui transmet ce message sous forme d'un message m11 "RNIS Connect" à l'autocommutateur PBX, qui transmet à son tour ce message sous forme d'un message propriétaire m12 au téléphone T_{A}.

En parallèle à l'envoi du message m10, la passerelle MGCF envoie à la passerelle MGW un message m13 "MGCP Modify Connection" comportant l'attribut "SendRecv" pour que celle-ci modifie la connexion précédemment créée entre le réseau RES1 et le réseau RES2, afin de la rendre bidirectionnelle. La passerelle MGW répond positivement à ce message m13 par un message m14 " MGCP 200 OK". A la réception de ce message m14, la passerelle MGCF envoie un message d'acquittement m15 "SIP ACK" au pont de conférence CONF.

Une connexion bidirectionnelle est alors établie entre le téléphone T_{A} et le pont de conférence CONF. Sur cette connexion, le pont de conférence CONF reçoit un flux de données f_{A1} en provenance du téléphone T_{A}, et transmet un flux de données f_{ACC} au téléphone T_{A}. Les flux de données sont transmis en utilisant le codec G.711 dans le réseau RES1, la passerelle MGW effectuant une conversion de ces flux en média RTP codés en utilisant le codec G711 ou G.729 en fonction des capacités du pont de conférence CONF et du résultat de la négociation de codecs avant de les transmettre au réseau RES2, et inversement.

Le flux f_{ACC} correspond à une annonce d'accueil invitant l'utilisateur du téléphone T_{A} à composer un code d'accès pour entrer en conférence.

L'utilisateur du téléphone T_{A} numérote ce code d'accès (DTMF), ce qui correspond au flux de données f_{A2} que reçoit le pont de conférence CONF en provenance de l'utilisateur du téléphone T_{A}.

Le flux de données f_{A1} représente les paroles prononcées par l'utilisateur du téléphone T_{A} pendant toute la conférence téléphonique sur la connexion bidirectionnelle venant d'être créée. Sa durée est donc celle de la conférence téléphonique, contrairement aux flux f_{ACC} et f_{A2} dont la durée est plus ponctuelle.

Puis un autre utilisateur, par exemple l'utilisateur du téléphone T_{B}, appelle le numéro réservé pour la conférence, ce qui donne lieu à la transmission d'un message m16 au format V.23 (protocole défini par le CCITT ("Comité Consultatif International du Télégraphe et Téléphone")) entre le téléphone T_{B} et le commutateur CAA. Celui-ci transmet alors un message m17 "ISUP Initial Address Message" à la passerelle MGCF, qui demande à la passerelle MGW de créer une connexion entre le téléphone T_{B} et le pont de conférence CONF, d'abord en mode réception puis bidirectionnelle, de manière équivalente à la création de la connexion entre le pont de conférence CONF et l'utilisateur du téléphone T_{A} décrite précédemment. La création de cette nouvelle connexion est de ce fait un peu moins détaillée ci-après.

Pour créer cette connexion, la passerelle MGCF envoie un message m18 MGCP "Create Connection" à la passerelle MGW avec l'attribut de direction "RecvOnly", la passerelle MGW répondant positivement à ce message par un message m19 "MGCP 200 OK". Puis la passerelle MGCF envoie un message m20 "SIP Invite" au pont de conférence CONF, comportant en attribut une indication d'une connexion bidirectionnelle grâce à l'attribut "SendRecv", le pont de conférence CONF lui répondant par un message m21 "SIP Trying" puis par un message m22 "SIP 200 OK" comportant une réponse SDP avec ses propres paramètres et l'attribut "SendRecv". A la réception du message m22, la passerelle MGCF envoie un message m23 "ISUP CON" au commutateur CAA, qui transmet ce message sous la forme d'un message m24 au format V.23 au téléphone T_{B}. En parallèle, la passerelle MGCF envoie un message m25 "MGCP Modify Connection" pour rendre la connexion précédemment crée par la passerelle MGW bidirectionnelle, celle-ci répondant positivement au message m25 par un message m26 "MGCP 200 OK". A la réception du message m26, la passerelle MGCF envoie un message d'acquittement m27 "SIP ACK" au pont de conférence CONF, ce qui achève d'établir la connexion entre le téléphone T_{B} et le pont de conférence CONF.

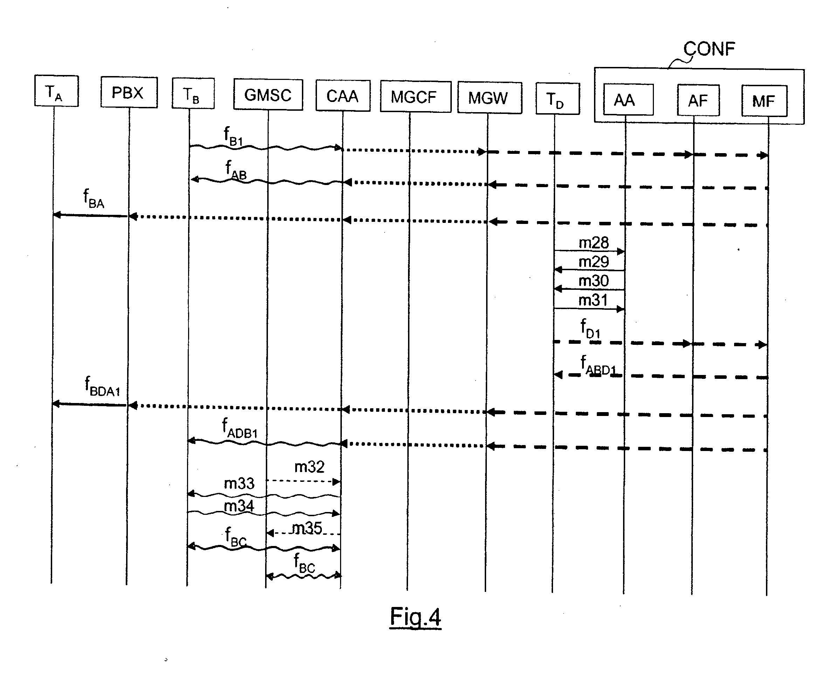

Sur cette connexion, le pont de conférence CONF reçoit un flux de données f_{B1}, représenté à la **figure 4**, en provenance du téléphone T_{B}. Le flux de données f_{B1} représente les paroles prononcées par l'utilisateur du téléphone T_{B} depuis son entrée dans la conférence téléphonique et ce jusqu'à la diffusion d'une musique d'attente par le commutateur CAA lorsqu'il bascule, plus loin, en situation de double appel.

Les flux de données f_{A1} et f_{B1} sont transmis par le module AF d'acquisition au module MF de mixage, qui transmet en retour:
- un flux de données f_{AB} correspondant aux paroles de l'utilisateur du téléphone T_{A}, à l'utilisateur du téléphone T_{B},
- et un flux de données f_{BA} correspondant aux paroles de l'utilisateur du téléphone T_{B}, à l'utilisateur du téléphone T_{A}.

Puis l'utilisateur du téléphone T_{D} appelle le numéro réservé pour la conférence, ce qui se traduit par la transmission d'un message m28 "SIP Invite" entre le téléphone T_{D} et le pont de conférence CONF, ce message m28 comportant un attribut "SendRecv" indiquant qu'une connexion bidirectionnelle est requise. A la réception du message m28, le pont de conférence CONF répond au téléphone T_{D} par un message m29 "SIP Trying" puis par un message m30 "SIP 200 OK "comportant une réponse SDP avec ses propres paramètres et l'attribut "SendRecv". Le téléphone T_{D} acquitte ensuite le message m30 par un message m31 "SIP ACK", ce qui achève d'établir une connexion bidirectionnelle entre le téléphone T_{D} et le pont de conférence CONF.

Sur cette connexion, le pont de conférence CONF reçoit un flux de données f_{D1}, en provenance du téléphone T_{D}. Le flux de données f_{D1} représente les paroles prononcées par l'utilisateur du téléphone T_{D} pendant toute la durée de la conférence téléphonique. Ce flux f_{D1} est transmis par le module AF d'acquisition au module MF de mixage, qui transmet en retour:
- un flux de données f_{ABD1} correspondant aux paroles des utilisateurs des téléphones T_{A} et T_{B}, à l'utilisateur du téléphone T_{D},
- un flux de données f_{BDA1} correspondant aux paroles des utilisateurs des téléphones T_{B} et T_{D}, à l'utilisateur du téléphone T_{A},
- et un flux de données f_{ADB1} correspondant aux paroles des utilisateurs des téléphones T_{A} et T_{D}, à l'utilisateur du téléphone T_{B}.
Les nouveaux flux de données f_{BDA1} et f_{ADB1} transmis respectivement à l'utilisateur du téléphone T_{A} et à l'utilisateur du téléphone T_{B}, suite à l'arrivée de l'utilisateur du téléphone T_{D} dans la conférence téléphonique, remplacent les flux de données respectifs f_{BA} et f_{AB} qui étaient précédemment transmis à l'utilisateur du téléphone T_{A} et à l'utilisateur du téléphone T_{B} par le module MF de mixage.

Les trois utilisateurs des téléphones T_{A}, T_{B} et T_{D} étant maintenant en conférence téléphonique, l'utilisateur du téléphone T_{C} compose le numéro de téléphone de l'utilisateur du téléphone T_{B}, ce qui se traduit au niveau du commutateur CAA par la réception d'un message m32 "ISUP IAM". Puisque l'utilisateur du téléphone T_{B} est abonné au service "signal d'appel" et que ce dernier est actif, le commutateur CAA notifie alors ce double appel à l'utilisateur du téléphone T_{B} dans un message m33 au format V.23, qui fait émettre par le téléphone T_{B} un bip sonore accompagné de l'affichage du numéro du téléphone T_{C} si ce dernier n'est pas masqué.

L'utilisateur du téléphone T_{B} accepte ce double appel en appuyant sur la touche "R2" de son téléphone T_{B}, qui envoie alors un message m34 au commutateur CAA pour le notifier de ce choix. Le commutateur CAA envoie alors à la passerelle GMSC un message m35 "ISUP CON", ce qui achève d'établir une connexion avec l'utilisateur du téléphone T_{C}. Cette connexion est matérialisée par le flux de données f_{BC} bidirectionnel sur la **figure 4****.**

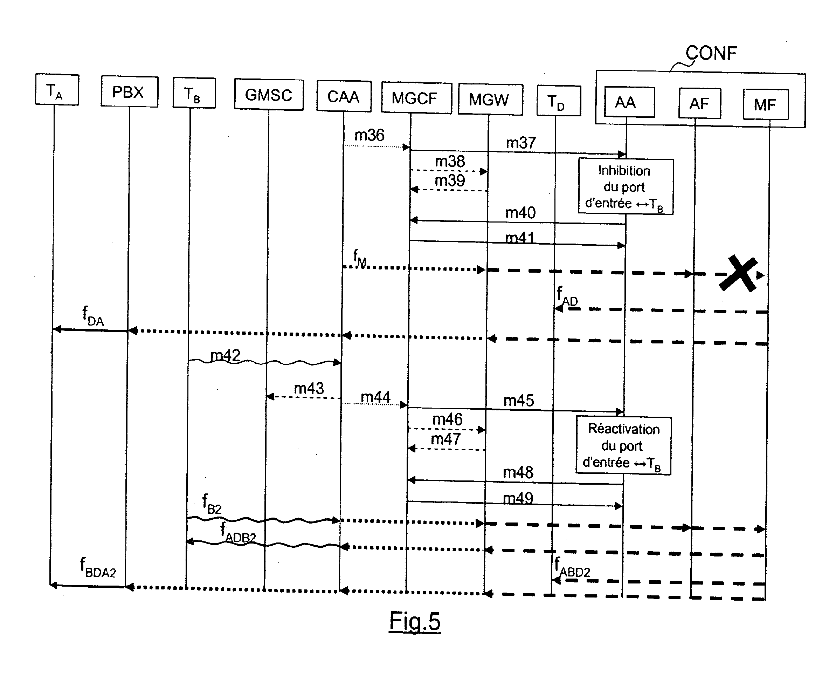

En parallèle à l'envoi du message m35, le commutateur CAA envoie un message m36 "ISUP PRG" incluant l'élément d'information "Mise en garde" à la passerelle MGCF, représenté à la **figure 5****,** pour transformer la connexion bidirectionnelle entre l'utilisateur du téléphone T_{B} et le pont de conférence CONF en une connexion unidirectionnelle du commutateur CAA vers le pont de conférence CONF. En effet le commutateur CAA diffuse lui-même, ou par l'intermédiaire d'un équipement dédié, une musique d'attente vers le pont de conférence CONF. Ce message m36 contient une indication de mise en garde grâce à l'élément d'information "Mise en garde". Cette mise en garde est généralement associée à la diffusion d'une musique d'attente générée par le CAA ou une autre entité du réseau.

La passerelle MGCF traduit ce message m36 en un message m37 "SIP Re-Invite" comportant dans ses paramètres SDP un attribut ayant la valeur "SendOnly", et l'envoie au pont de conférence CONF. C'est le contenu de ce message m37 qui permet à l'automate AA de traitement d'appel entrant de détecter la prise d'un autre appel par l'utilisateur du téléphone T_{B}, tout en mettant en attente le pont de conférence CONF. En parallèle de l'envoi du message m37, la passerelle MGCF envoie un message m38 "MGCP Modify Connection" comportant un attribut "SendOnly" à la passerelle MGW afin de modifier la connexion pour la rendre unidirectionnelle vers le pont de conférence CONF. A la réception de ce message m38, la passerelle MGW modifie la connexion et répond positivement au message m38 en envoyant un message m39 "MGCP 200 OK" à la passerelle MGCF.

En parallèle du dialogue entre la passerelle MGCF et la passerelle MGW, le pont de conférence CONF répond positivement au message m37 par l'envoi d'un message m40 "SIP 200 OK" contenant une réponse SDP avec l'attribut "RecvOnly" à la passerelle MGCF, qui acquitte ce message m40 par l'envoi d'un message m41 "SIP ACK" au pont de conférence CONF.

Le flux de données f_{M} unidirectionnel envoyé ensuite par le commutateur CAA au pont de conférence CONF et correspondant à une musique d'attente est bloqué au niveau du pont de conférence CONF à l'entrée du module de mixage MF, comme représenté à la **figure 5**.

Le module de mixage MF ne transmet alors plus au téléphone T_{D} qu'un flux de données f_{AD}, correspondant aux paroles de l'utilisateur A, et au téléphone T_{A} un flux de données f_{DA}, correspondant aux paroles de l'utilisateur D. Les flux f_{ABD1}, f_{BDA1} et f_{ADB1} précédemment mixés par le module de mixage MF ne sont donc plus envoyés aux téléphones T_{D}, T_{A} et T_{B}. Les nouveaux flux f_{AD} et f_{DA} durent jusqu'à ce que l'utilisateur du téléphone T_{B} rebascule dans la conférence téléphonique.

L'utilisateur du téléphone T_{B} rebascule dans la conférence téléphonique en appuyant sur la touche "R1" de son téléphone, ce qui provoque l'envoi d'un message m42 au commutateur CAA pour le notifier de ce choix. Le commutateur CAA envoie alors à la passerelle GMSC un message m43 "ISUP REL", ce qui met fin à la connexion avec l'utilisateur du téléphone T_{C}. Le commutateur CAA envoie ensuite un message m44 "ISUP PRG" contenant l'élément d'information "Levée de mise en garde" lié à la connexion entre l'utilisateur du téléphone T_{B} et le pont de conférence CONF, à la passerelle MGCF. Cet élément d'information indique que la connexion repasse en mode "full duplex", et est donc significatif du caractère bidirectionnel de la connexion.

A la réception de ce message m44, la passerelle MGCF traduit ce message en un message m45 "SIP Re-Invite" comportant dans ses paramètres SDP l'attribut "SendRecv", et l'envoie au pont de conférence CONF. L'automate AA de traitement d'appel entrant analyse ce message m45 et détecte ainsi la reprise de la conférence téléphonique par l'utilisateur du téléphone T_{B}, ce qui a pour conséquence la réactivation du port d'entrée correspondant à la connexion avec l'utilisateur du téléphone T_{B}, au niveau du module MF de mixage.

En parallèle à l'envoi du message m45, la passerelle MGCF envoie un message m46 "MGCP Modify Connection" comportant un attribut "SendRecv" à la passerelle MGW afin de modifier cette connexion pour la rendre à nouveau bidirectionnelle vers le pont de conférence CONF. A la réception de ce message m46, la passerelle MGW modifie la connexion et répond positivement au message m46 en envoyant un message m47 "MGCP 200 OK" à la passerelle MGCF.

En parallèle du dialogue entre la passerelle MGCF et la passerelle MGW, le pont de conférence CONF répond positivement au message m45 par l'envoi d'un message m48 "SIP 200 OK" contenant une réponse SDP avec l'attribut "SendRecv" à la passerelle MGCF, qui acquitte ce message m48 par l'envoi d'un message m49 "SIP ACK" au pont de conférence CONF.

Une fois la connexion entre l'utilisateur du téléphone T_{B} et le pont de conférence CONF redevenue bidirectionnelle, les paroles de l'utilisateur du téléphone T_{B} sont transmises dans un flux de données f_{B2} à destination du pont de conférence CONF, qui transmet :
- un flux de données f_{ABD2} correspondant aux paroles des utilisateurs des téléphones T_{A} et T_{B}, à l'utilisateur du téléphone T_{D},
- un flux de données f_{BDA2} correspondant aux paroles des utilisateurs des téléphones T_{B} et T_{D}, à l'utilisateur du téléphone T_{A},
- et un flux de données f_{ADB2} correspondant aux paroles des utilisateurs des téléphones T_{A} et T_{D}, à l'utilisateur du téléphone T_{B}.

Les nouveaux flux de données f_{BDA2} et f_{ABD2} remplacent les flux f_{DA} et f_{AD} précédemment transmis par le module MF de mixage.

## Revendications

1. Procédé de communication mettant en relation au moins trois utilisateurs au sein d'une conférence, comportant:
- une étape (E1) de réception de flux de données (f_{A1}, f_{B1}, f_{D1}) émis par lesdits utilisateurs,
- une étape (E2) de mixage desdits flux de données,
**caractérisé en ce qu'**il comporte en outre:
- une étape (E3) de détection d'un passage en communication monodirectionnelle en direction de la conférence, d'un desdits utilisateurs,
- déclenchant une étape (E4) d'inhibition d'un canal de communication comportant un flux de données (f_{M}) émis par ledit utilisateur et reçu lors de ladite étape (E1) de réception.

2. Procédé de communication selon la revendication 1, **caractérisé en ce que** ladite étape (E3) de détection utilise la valeur d'un paramètre de message (m37) de signalisation, significative d'un basculement en mode unidirectionnel dudit canal de communication établi avec ledit utilisateur et comportant ledit flux de données (f_{M}).

3. Procédé de communication selon la revendication 1 ou 2, **caractérisé en ce qu'**il comporte en outre:
- une étape (E5) de détection d'un basculement vers la conférence par ledit utilisateur,
- déclenchant une étape (E6) de réactivation dudit canal de communication précédemment inhibé.

4. Procédé de communication selon la revendication 3, **caractérisé en ce que** ladite étape (E5) de détection d'un basculement vers la conférence utilise la valeur d'un paramètre de message (m45) de signalisation, significative d'un basculement en mode bidirectionnel dudit canal de communication établi avec ledit utilisateur.

5. Dispositif (CONF) comportant des moyens de mise en relation d'au moins trois utilisateurs au sein d'une conférence, lesdits moyens de mise en relation comportant des moyens de réception (AF) de flux de données émis par lesdits utilisateurs, et des moyens de mixage (MF) desdits flux de données, ledit dispositif (CONF) étant **caractérisé en ce qu'**il comporte en outre des moyens de détection (AA) d'un passage en communication monodirectionnelle en direction de la conférence, d'un desdits utilisateurs, déclenchant des moyens d'inhibition d'un canal de communication comportant un flux de données (f_{M}) émis par ledit utilisateur en sortie desdits moyens de réception (AF).

6. Programme d'ordinateur comportant des instructions pour mettre en oeuvre le procédé selon l'une quelconque des revendications 1 à 4, lorsqu'il est exécuté sur un ordinateur.

## Patentansprüche

1. Kommunikationsverfahren, das wenigstens drei Anwender in einer Konferenz in Beziehung setzt und Folgendes umfasst:
- einen Schritt (E1) des Empfangens von Datenströmen (f_{A1}, f_{B1}, f_{D1}), die von den Anwendern ausgesendet werden,
- einen Schritt (E2) des Mischens der Datenströme,
**dadurch gekennzeichnet, dass** es außerdem Folgendes umfasst:
- einen Schritt (E3) des Detektierens eines monodirektionalen Kommunikationsübergangs in Richtung der Konferenz eines der Anwender,
- Auslösen eines Schrittes (E4) des Sperrens eines Kommunikationskanals, der einen Datenstrom (f_{M}) enthält, der von dem Anwender ausgesendet und im Empfangsschritt (E1) empfangen wird.

2. Kommunikationsverfahren nach Anspruch 1, **dadurch gekennzeichnet, dass** der Detektionsschritt (E3) den Wert eines Signalgebungs-Nachrichtenparameters (m37) verwendet, der ein Umschalten in die unidirektionale Betriebsart des Kommunikationskanals, der mit dem Anwender aufgebaut wird und der den Datenstrom (f_{M}) enthält, angibt.

3. Kommunikationsverfahren nach Anspruch 1 oder 2, **dadurch gekennzeichnet, dass** es außerdem Folgendes umfasst:
- einen Schritt (E5) des Detektierens eines Umschaltens zu der Konferenz durch den Anwender,
- Auslösen eines Schrittes (E6) des Reaktivierens des vorher gesperrten Kommunikationskanals.

4. Kommunikationsverfahren nach Anspruch 3, **dadurch gekennzeichnet, dass** der Schritt (E5) des Detektierens eines Umschaltens zu der Konferenz den Wert einer Signalgebungs-Nachrichtenparameters (m45) verwendet, der ein Umschalten in die bidirektionale Betriebsart des mit dem Anwender aufgebauten Kommunikationskanals angibt.

5. Vorrichtung (CONF), die Mittel umfasst, um wenigstens drei Anwender in einer Konferenz in Beziehung zu setzen, wobei die Beziehungsherstellungsmittel Mittel (AF) zum Empfangen von Datenströmen, die von den Anwendern ausgesendet werden, und Mittel (MF) zum Mischen der Datenströme umfasst, wobei die Vorrichtung (CONF) **dadurch gekennzeichnet ist, dass** sie außerdem Mittel (AA) zum Detektieren eines Übergangs in die monodirektionale Kommunikation in Richtung der Konferenz eines der Anwender umfasst, die Mittel zum Sperren eines Kommunikationskanals, der einen Datenstrom (f_{M}) enthält, der von dem Anwender am Ausgang der Empfangsmittel (AF) ausgesendet wird, auslösen.

6. Computerprogramm, das Befehle enthält, um das Verfahren nach einem der Ansprüche 1 bis 4 auszuführen, wenn es in einem Computer ausgeführt wird.

## Claims

1. Method of communication connecting at least three users within a conference, comprising:
- a step (E1) of receiving data streams (f_{A1}, f_{B1}, f_{D1}) sent by said users,
- a step (E2) of mixing said data streams, **characterized in that** it furthermore comprises:
- a step (E3) of detecting a switchover to monodirectional communication in the direction of the conference, of one of said users,
- triggering a step (E4) of inhibiting a communication channel comprising a data stream (f_{M}) sent by said user and received during said receiving step (E1).

2. Method of communication according to Claim 1, **characterized in that** said detecting step (E3) uses the value of a signalling message parameter (m37), which value is indicative of a toggling to unidirectional mode of said communication channel established with said user and comprising said data stream (f_{M}).

3. Method of communication according to Claim 1 or 2, **characterized in that** it furthermore comprises:
- a step (E5) of detecting a toggling over to the conference by said user,
- triggering a step (E6) of reactivating said previously inhibited communication channel.

4. Method of communication according to Claim 3, **characterized in that** said step (E5) of detecting a toggling over to the conference uses the value of a signalling message parameter (m45), which value is indicative of a toggling to bidirectional mode of said communication channel established with said user.

5. Device (CONF) comprising means for connecting at least three users within a conference, said connecting means comprising means (AF) for receiving data streams sent by said users, and means (MF) for mixing said data streams, said device (CONF) being **characterized in that** it furthermore comprises means (AA) for detecting a switchover to monodirectional communication in the direction of the conference, of one of said users, triggering means for inhibiting a communication channel comprising a data stream (f_{M}) sent by said user at the output of said receiving means (AF).

6. Computer program comprising instructions for implementing the method according to any one of Claims 1 to 4, when it is executed on a computer.
